(19) Europäisches Patentamt / European Patent Office / Office européen des brevets

(11) **EP 4 197 982 A1**

(12) **EUROPEAN PATENT APPLICATION**

(43) Date of publication:
**21.06.2023 Bulletin 2023/25**

(21) Application number: **21215647.5**

(22) Date of filing: **17.12.2021**

(51) International Patent Classification (IPC):
**C04B 20/02** (2006.01)     **C04B 28/10** (2006.01)

(52) Cooperative Patent Classification (CPC):
(C-Sets available)
**C04B 20/023; C04B 28/10**     (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Holcim Technology Ltd**
**5113 Holderbank (CH)**

(72) Inventors:
• **Benard, Philippe**
  **Lyon (FR)**
• **Briaud, Vincent**
  **Frontonas (FR)**
• **Dietz, Stefan**
  **Ammerswil (CH)**
• **Bermejo, Edelio**
  **Lyon (FR)**

(74) Representative: **HGF**
**HGF Europe LLP**
**Neumarkter Straße 18**
**81673 München (DE)**

(54) **METHOD FOR THE PREPARATION OF A CARBONATED MINERAL COMPONENT, CARBONATED MINERAL COMPONENT AND METHOD FOR THE PREPARATION OF A BINDER COMPOSITION**

(57)     The Invention relates to a Method for the preparation of a carbonated mineral component in particular for the use as a substituent of cement in hydraulic binder compositions wherein a mineral component with a $(CaO+MgO)/SiO_2$ weight ratio of 1.2 to 5.0 is
-ground to obtain a powder;
-the powder is mixed with water;
-the paste composed of the mineral component with water is placed in a reactor in an atmosphere containing $CO_2$;
-the paste is left to carbonate in the reactor for a predetermined time;
-the hardened resulting material is dried until its weight is constant or

-the mineral component is ground to a Blaine fineness comprised between 3'000 cm2/g and 10'000 cm2/g to obtain a powder;
-during grinding in a mill a CO2 rich gas is injected into the mill so that the component carbonates.
-the powder is mixed with water at a solid to water weight ratio comprised between 0.3 and 1.5 to obtain a paste, or pre-humidified by adding water at a solid to water weight ratio comprised between 0.03 and 0.2;
-the hardened resulting material is dried at a temperature of 60 - 85°C, preferentially 80°C until its weight is constant;
-the resulting material is deagglomerated and sieved..

EP 4 197 982 A1

(52)  Cooperative Patent Classification (CPC): (Cont.)

C-Sets
**C04B 20/023, C04B 14/042, C04B 14/043,**
**C04B 20/026;**
**C04B 20/023, C04B 18/08, C04B 18/141,**
**C04B 18/16, C04B 20/026;**
**C04B 28/10, C04B 7/02**

**Description**

The invention relates to a method for the preparation of a carbonated mineral component, the carbonated mineral component as well as a method for the preparation of a hydraulic binder composition.

The carbonation of materials for use in construction materials is well known. Examples, such as carbonation of steel slag, special cements and concrete demolition waste have already been disclosed. The known carbonation of materials can be divided into two main approaches.

In the first approach the material is hardened by carbonation. Carbonation methods are known for the hardening which use standard processes, wherein this approach is for example disclosed in patent applications filed by Carbstone Innovation, Solidia Technologies or CarbonCure.

The processes disclosed in these applications should have the advantage of sequestering $CO_2$ by forming particules of calcium carbonate. This can be achieved in several construction applications such as a production of small construction elements like pavers or blocks. In these methods the material to be carbonated may be mixed with small amounts of water and placed into moulds. These moulds are then placed in a curing chamber with a relatively high amount of $CO_2$, under control temperature and relative humidity. Through the carbonation of the materials, the carbonated elements develop mechanical strength.

The second approach is to carbonate a mineral constituent and to use it afterwards in powder form as a carbonated mineral component. The aim is to reduce the amount of Portland clinker in cement compositions by replacing parts of the Portland cement with that powder made from the carbonated mineral component. In a method according to the second approach the carbonated mineral materials are used in a particular form which is then added to the Portland cements as a cement substituent. For example, demolition waste is carbonated via different processes and the resulting products are used as the cement substituent components. Hereby, the amount of Portland clinker in the cement is lowered for the purpose of providing a material that reduces the $CO_2$ footprint. In the second approach the carbonation results in the formation of calcium carbonate particles which act as already mentioned as a filler material but do not contribute to the strength development of the cement. Consequently, higher carbonation rates or amounts of carbonated material in the cement result in a lower strength development of the concrete in the application. In practice the amount of carbonated mineral component according to the second approach is limited in cement compositions.

The second approach is for example disclosed in EP 3656750, WO2019/115722, EP 3581257 and EP 3498681 A1.

From Yingpeng Hu, Journal of Energy Chemistry, volume 26, issue 5, September 2017, pages 927 - 935 the indirect mineral carbonation of a blast-furnace slag with $(NH_4)_2SO_4$ as a recyclable extant is known, wherein in this document $(NH_4)_2SO_4$ was used to extract calcium and magnesium from blast-furnace slag (the main phases of gehlenite and akermanite by using low-temperature roasting to fix $CO_2$ through aqueous carbonation.

Daniela Angulo, Materiales de Construccion 69 (333): 182, relates to the carbonation of hybrid concrete with high blast-furnace slag content and its impact on structural steel corrosion.

The effect of blast-furnace slag replacement the ratio and curing method on pore structure and the change after carbonation on cement paste is disclosed in Junho Kim, Seung Hyun Na and Yukio Hama, materials (Basel), November 13, 2020 (21): 4787.

The object of the invention is to provide for a method for the manufacturing of a carbonated mineral component which does not lead to a loss of strength in case it is added to a hydraulic binder composition as a substituent for a hydraulic component in particular a cement.

The object is met by way of the method according to claim 1.

It is a further object of the present invention to provide for a carbonated mineral component as a substituent for a hydraulic component in a hydraulic binder composition.

This object is met by way of the mineral component of claim 13.

It is still a further object of the invention to provide a method for the manufacturing of a hydraulic binder composition with a carbonated mineral component.

This object is met by way of the method for the manufacturing of the mineral binder according to claim 16.

Further embodiments are claimed in the respective dependent claims.

It was surprisingly found that the use of a carbonated mineral component according to the invention does not lead to a loss of the 28-day strength in a cement concrete which is prepared with a hydraulic binder component and the carbonated mineral component of the present invention. The mineral component according to the invention has a weight ratio of $(CaO+MgO)/SiO_2$ between 1.20 and 5.0, in particular between 1.20 and 2.0. Suitable mineral components which meet this ratio are for example ground granulated blast-furnace slag or class C fly ashes according to the definition provided in the standard ASTMC618. It was found that a ratio below 1.20 is not suitable.

The CaO content in the mineral component should at least be 35 wt.-% measured by XRF.

In a first embodiment, the method according to the invention may comprise the following steps:

1. The mineral component is ground to a Blaine fineness comprised between 3'000 cm$^2$/g and 10'000 cm$^2$/g in particular between 5'000 cm$^2$/g and 8'000 cm$^2$/g to obtain a powder;

2. The powder is mixed with water at a solid to water weight ratio comprised between 0.3 and 1.5 to obtain a paste, or pre-humidified by adding water at a solid to water weight ratio comprised between 0.03 and 0.2;

3. The paste or the pre-humidified powder composed of the mineral component with water is placed in a reactor which operates at normal atmospheric pressure, a temperature of 50 - 90°C and relative humidity of 56 - 95% in an atmosphere containing $CO_2$;

4. The paste is left to carbonate in the reactor for a duration between 0.5 and 52 hours, preferentially 12 to 30 hours, more preferred 24 hours;

5. The hardened resulting material is dried at a temperature of 60 - 85°C, preferentially 80°C until its weight is constant;

6. The resulting material is deagglomerated and sieved.

The reactor is preferentially fed with a $CO_2$ rich gas from a cement plant, which contains at least 5% $CO_2$. This gas contains further contains water vapour that provides the required environment for the carbonation to take place. This gas may be cooled down so as to reach a temperature of 60 - 85°C in the reactor.

In particular, the resulting material is sieved to 63 $\mu$m to exclude coarse aggregates.

The resulting material can be further ground to a higher fineness. The ground resulting material is blended into a hydraulic mineral component, in particular into a cementitious component and in particular to a Portland cement.

In an alternative embodiment, the method according to the invention may comprise the following steps:

1. the mineral component is ground to a Blaine fineness comprised between 3'000 cm2/g and 10'000 cm2/g to obtain a powder;

2. during grinding in a mill a $CO_2$ rich gas is injected into the mill so that the component carbonates.

3. the powder is mixed with water at a solid to water weight ratio comprised between 0.3 and 1.5 to obtain a paste, or pre-humidified by adding water at a solid to water weight ratio comprised between 0.03 and 0.2;

4. the hardened resulting material is dried at a temperature of 60 - 85°C, preferentially 80°C until its weight is constant;

5. the resulting material is deagglomerated and sieved.

The mill is preferentially fed with a $CO_2$ rich gas, in particular combustion gas from a cement plant, which contains at least 5% $CO_2$. This gas contains further contains water vapour that provides the required environment for the carbonation to take place. This gas may be cooled down so as to reach a temperature of 60 - 85°C in the mill.

The blending into that cementitious component can be achieved by mixing in the finally ground resulting material into the cementitious component or adding it before grinding the cement clinker to the clinker.

The carbonation process can be carried out according to any known industrial process using a $CO_2$ containing gas. In particular, according to the invention the gas may contain a minimum of 5% of $CO_2$.

As a result, it was found that up to 15% $CO_2$ can be captured by the mineral component to be carbonated. In particular, this may happen when the whole component is mixed with water at a water cement ratio between 0 - 1 or somewhat more and exposed to the $CO_2$ atmosphere for example 24 hours.

It was further found that a carbonation duration of 30 minutes can result in up to 5% $CO_2$ captured by the mineral component.

Further, it could be derived that the level of $CO_2$ capture is variable according to the slag source and depends in particular on the amount of amorphous phases in the slag, the fineness of the slag and the CaO+MgO+Na$_2$O equivalent.

Surprisingly it was found that a hydraulic binder composition with the carbonated mineral component pertaining to the compressive strength performs similar to a hydraulic binder composition with a non-carbonated mineral reference material. In particular, this is valid for a replacement of a cementitious component by the carbonated mineral component or the non-carbonated mineral component of 25 weight-% at least, respectively.

Further it was found that the carbonation step is essential. In case a slag is carbonated the carbonation mainly occurs with the CaO of the slag. A slag which was carbonated to a weight gain of 10% did not lower the 28 day strength. A slag in which the 10% carbonation weight gain was simulated by adding limestone to the same non-carbonated slag lowered the 28 day compressive strength so that it can be concluded that the carbonation step indeed has an influence.

In summary it was surprisingly found that a selected carbonated mineral component with a special composition and a selected weight ratio between CaO+MgO and SiO$_2$ leads to a substituent for a cementitious constituent in a hydraulic binder composition without the otherwise expected loss of strength and in particular compressive strength after 28 days.

The invention in particular relates to a method for the preparation of a carbonated mineral component in particular for the use as a substituent of cement in hydraulic binder compositions wherein a mineral component with a (CaO+MgO)/SiO$_2$ weight ratio of 1.2 to 5.0 is

- ground to obtain a powder;
- the powder is mixed with water to obtain a paste;
- the paste composed of the mineral component with water is placed in a reactor in an atmosphere containing $CO_2$;
- the paste is left to carbonate in the reactor for a predetermined time
- the hardened resulting material is dried until its weight is constant;
- the resulting material is deagglomerated and sieved

  or
- the mineral component is ground to a Blaine fineness comprised between 3'000 cm2/g and 10'000 cm2/g to obtain a powder;
- during grinding in a mill a $CO_2$ rich gas is injected into the mill so that the component carbonates.
- the powder is mixed with water at a solid to water weight ratio comprised between 0.3 and 1.5 to obtain a paste, or pre-humidified by adding water at a solid to water weight ratio comprised between 0.03 and 0.2;
- the hardened resulting material is dried at a temperature of 60 - 85°C, preferentially 80°C until its weight is constant;
- the resulting material is deagglomerated and sieved.

In an embodiment the minimum content of CaO in the mineral component is 35 wt-% measured by XRF.

In an embodiment the $CO_2$ rich gas is a combustion gas from a cement plant.

In an embodiment the $(CaO+MgO)/SiO_2$ weight ratio is 1.20 to 2.0.

In an embodiment the mineral component is ground to a Blaine fineness of at least 3000 cm 2/g.

In an embodiment the powder of the mineral component is mixed with water at a solid to water weight ratio comprised between 0.3 and 1.5.

In an alternative embodiment the powder of the mineral component is mixed with water at a solid to water weight ratio comprised between 0.03 and 0.2. In this embodiment, water can for example be sprayed onto the mineral component before carbonation.

In an embodiment the reactor operates at normal atmospheric pressure, a temperature of 50 - 90°C and relative humidity of 56 - 95%.

In an embodiment the paste is left to carbonate in the reactor for a duration between 12 and 52 hours, preferentially 18 to 30 hours, more preferred 20 to 26 hours and most preferred 24 hours.

In an embodiment the hardened resulting material is dried at a temperature of 60 - 85°C, preferentially 80°C.

In an embodiment the resulting material is sieved to 63 $\mu$m to exclude coarse aggregates.

In an embodiment the resulting carbonated mineral component is ground to a Blaine fineness of 3'000 cm$^2$/g to 10'000 cm$^2$ /g preferentially between 5000 and 8000cm$^2$/g.

In an embodiment the mineral component is chosen from at least one of ground granulated blast-furnace slag, ground steel slag, fly ash, ground concrete demolition waste, and preferably ground granulated blast-furnace slag only.

Another aspect of the invention relates to a carbonated mineral component in particular a carbonated mineral component manufactured as described before with a $(CaO+MgO)/SiO_2$ weight ratio of 1.2 to 5.0 calculated on the non-carbonated constituents.

In an embodiment the carbonated mineral component has a degree of carbonization between 5 and 20 weight-% calculated on the non-carbonated constituents, preferably between 8 and 16 weight-% calculated on the non-carbonated constituents.

In an embodiment the carbonated mineral component has a Blaine fineness of 3'000 cm$^2$/g to 10'000 cm$^2$/g

Still another aspect of the invention pertains to a method for the preparation of a binder composition in particular a hydraulic binder composition wherein a carbonated mineral component as described before with a $(CaO+MgO)/SiO_2$ weight ratio of 1.2 to 5.0 calculated on the weight of the non-carbonated constituents is mixed with at least a cementitious component in particular a Portland cement or a Portland cement clinker.

In an embodiment the carbonated mineral component is added to cement clinker before or at the milling and ground together with the cement clinker to obtain a binder composition comprising at least the carbonated mineral component and the cement.

In an embodiment the ground carbonated mineral component with a Blaine fineness of 3'000 cm$^2$/g to 10'000 cm$^2$/g in particular of 5'000 cm$^2$/g to 8'000 cm$^2$/g is mixed at least with the ground cement to obtain a binder composition comprising at least the carbonated mineral component and the cement.

Still another aspect of the invention relates to the use of a carbonated mineral component as described before, manufactured with a method as described before as a substituent for cement in a hydraulic binder composition.

The invention is further explained by way examples. The examples are shown in accompanying drawings, which show:

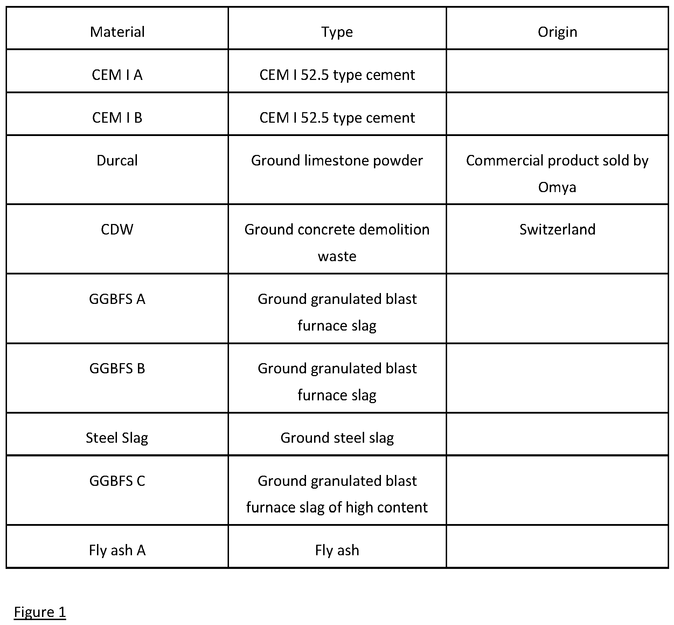

Figure 1: a table showing the list of materials used;

Figure 2:    the fineness and the Blaine surface of the used materials;

Figure 3:    the relevant chemical composition of the components;

Figure 4:    the compressive strength of the materials and material admixtures without carbonation;

Figure 5    the compressive strength of the materials and material admixtures with carbonation

Figure 6:    schematically the test device;

Figure 7:    the impact of the fineness of the mineral component;

Figure 8:    three comparative examples in which carbonated material is substituted by limestone.

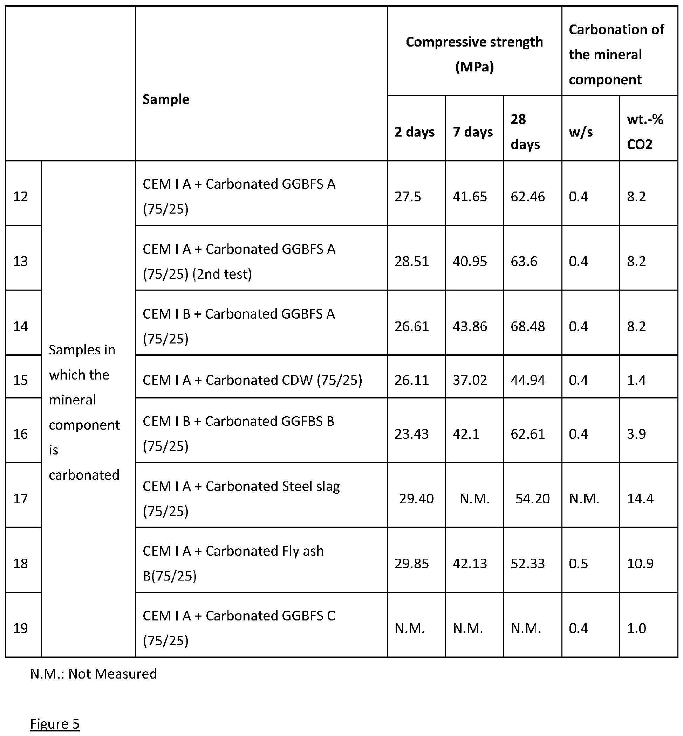

With reference to Figure 5 samples of 10g each are prepared from a mineral component and mixed with water with different water-cement ratios in sample pans.
The sample pans with the sample materials are introduced in a market available container which allows temperature control as well as a gas control. The gas control comprises the composition of the gas and the gas pressure wherein the container has respective gas connections (inlet/outlet) to provide for a gas flow.
The relative humidity is controlled by means of a tank of deionised water laid on the bottom of the container.
The temperature is set to 70 - 80°C and the $CO_2$-pressure at the inlet of the chamber is set to 1.02 bar and remain constant. The relative humidity which was set by means of the tank was measured as to be 80 - 85% in the reactor.
After a predetermined time in the container the carbonation and hydration amount of the respective materials were determined.

a) Total mass gain with respect to mineral component

The total mass gain ($\Delta m$, see eq. (1)) is related to both bound water ($\Delta m\_H2O$) and bound $CO_2$ ($\Delta m\_CO_2$) with respect to the mineral component [g/g of mineral component].
After carbonation, the samples are dried at 80°C to get the final dry mass noted m(f,dry), expressed in grams [g].
The mass of the samples after mixing and before carbonation is known, it is noted m(0,wet) and expressed in grams [g].
The mass of the solid, i.e. the dry mass, is calculated from initial mix composition, it is noted m(0,dry) and expressed in grams [g].

Equation 1:

$$\Delta m = (m(f,dry) - m(0,dry)) / m(0,dry$$

b) $CO_2$ mass gain with respect to the mineral component:

The bound water content and bound $CO_2$ content with respect to the mass of samples is also calculated from the measured mass of samples, respectively at 550°C and 950°C. The mass difference of samples between 80°C and 550°C is related to bound water content (see eq. (2)) whereas the mass loss of samples between 550°C and 950°C is related to CO2 content (see eq. (3)).

Equation 2:
$$〖\Delta m〗\_H2O = ((m(f,80) - m(f,550))) / m(950)$$

Equation 3:
$$〖\Delta m〗\_CO2 = ((m(f,550) - m(f,950))) / m(950)$$

In this way prepared carbonated mineral components were used to prepare respective mortars and measuring the compressive strength according to the norm NF EN196-1 of September 2016.

In the tables according to the Figures the samples are shown, wherein all samples, which are marked 75/25 were made of a composition of a cement CEM I (A or B) and 25 wt.-% of the respective mineral component. Carbonated mineral components according to the invention were used as well as the same mineral components without the carbonation step to elaborate the differences in the strength development. The respective 75/25 admixtures were used to prepare a mortar and the compressive strength was determined as described above.

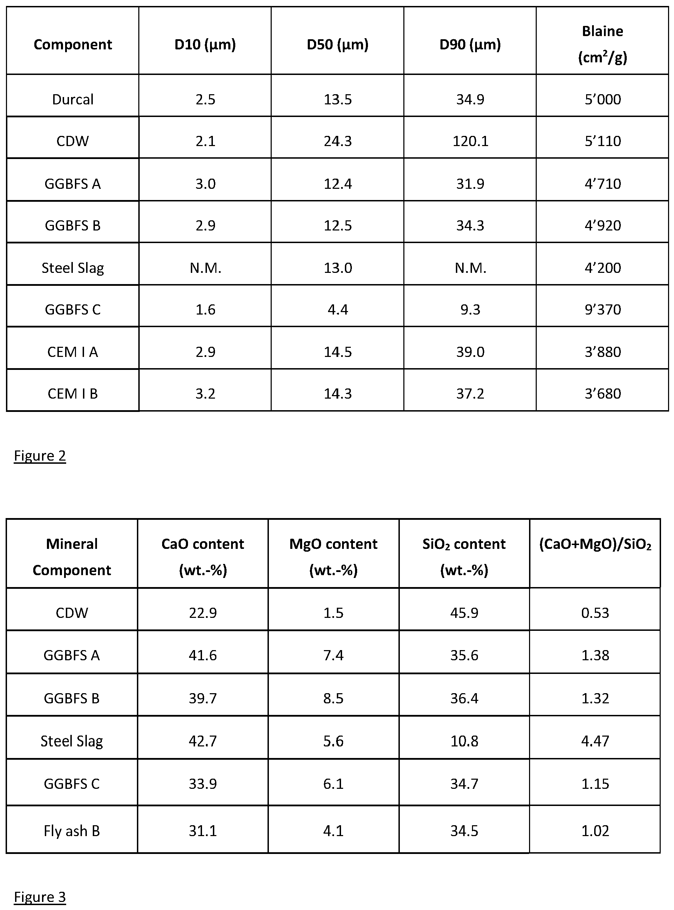

Figure 2 and Figure 3 lists the mineral components used in the examples. As will be confirmed in the results discussed further below, GGBFS C and the fly ash B are not suitable for the present invention.

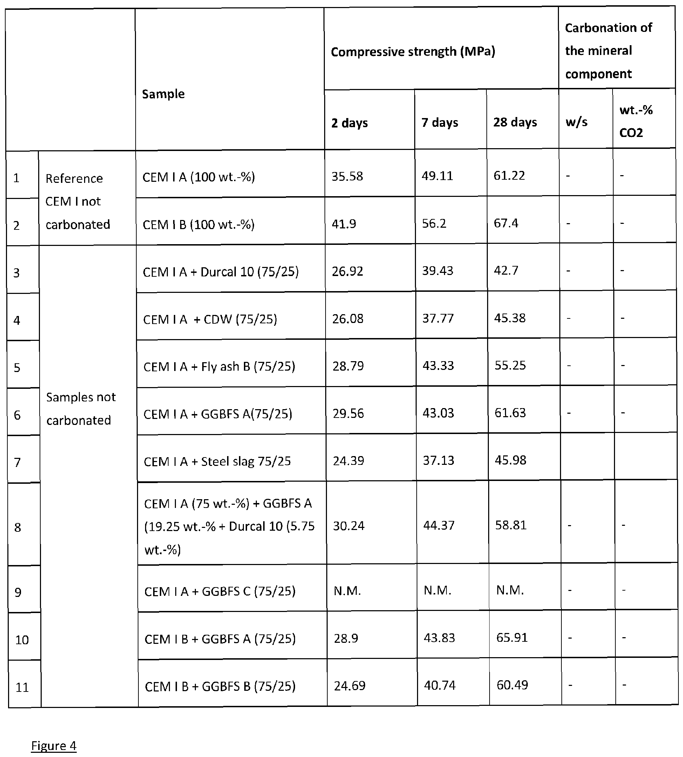

The results related to the strength of the mortar and carbonation of the mineral component are presented in Figure 4.

As a comparative example, sample 1 and sample 2 pertain to a pure CEM I (A and B) sample without an additional mineral component.

Samples 3 - 11 (Figure 4) show the impact of the substitution of CEM I A and B with a non-carbonated mineral component on strength development. In all cases in comparison to a mortar made of the pure CEM I cement, the strength at 2 and 7 days is always reduced and the strength at 28 days is reduced, except in the case of ground blast-furnace slags B which contributes positively to the compressive strength at 28 days at a similar level as CEM I. This could be expected according to the latent hydraulic properties of this blast-furnace slag.

Samples 12 - 19 (Figure 5) are examples with carbonated mineral components. The mineral components were carbonated for 24 hours in the already defined way. As it can be seen the samples 12 and 14 with CEM I A and CEM I B and blast-furnace slag A as the mineral component led to a compressive strength after 28 days in the range which can be achieved by the corresponding CEM I alone. A certain deviation occurs between samples 12 and 13, which is not significant.

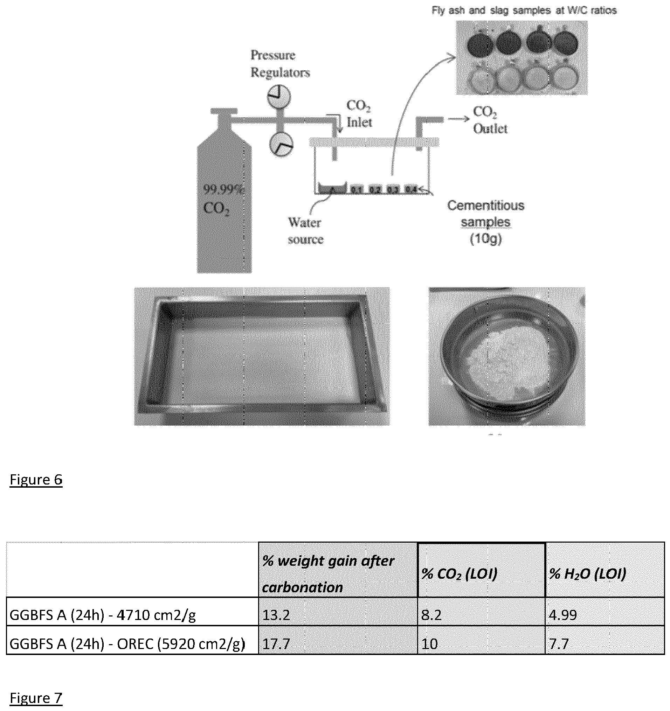

A closer look to the impact of the fineness of the mineral component was made by grinding the blast-furnace slag to two different Blaine grades: 4'710 $cm^2$/g and 5'920 $cm^2$. Here too, these constituents were carbonated for 24 hours in the already defined way. The results can be seen in Figure 7 wherein the weight gain after carbonation is higher with a higher fineness and more or less uniformly the carbonation weight gain is about 2%, wherein the weight gain by the introduction of water is 2.7%.

Sample 5 in Figure 4 pertains to the use of CEM I A with a fly ash B without any carbonation wherein sample 18 pertains to the same CEM I A and carbonated fly ash. In comparison in particular of sample 18 showing a carbonated fly ash B with CEM I A and the same constituents but with a non-carbonated fly ash which is sample 5, it can be seen that the carbonation caused a 28-day compressive strength of 52,33 MPa and 55.25 MPa in sample 5.

As in sample 18 the carbonated fly ash B obviously does not contribute to a higher compressive strength than in comparison to sample 5 it can be concluded that according to the lower ratio of $(CaO+MgO)/SiO_2$ of 1.02, this example is not working and therefore, outside of the inventive range. In this sample the dilution effect of the fly ash as a mineral component was not compensated by carbonation.

Another sample showing the lower limit is the ground concrete demolition waste (CDW) with a ratio of $(CaO+MgO)/SiO_2$ of 0.53. A sample of CEM I A with CDW (sample 4) showed a remarkable drop of the 28 days compressive strength from over 60 to 45.38 MPa. The same situation but with a carbonated CDW (sample15) did not lead to a higher compressive strength.

Samples 9 and 19 pertain to the use of GGBFS C as a non-carbonated (sample 9) and carbonated (sample 19) mineral component. This mineral component has a $(CaO+MgO)/SiO_2$ ratio of 1.15. Example 19 shows that this slag GGBFS C did not carbonate efficiently, as the carbonation, expressed in wt.-% $CO_2$, was only of 1 wt.-%. This example is therefore not working and therefore, outside of the inventive range.

Therefore, a $(CaO+MgO)/SiO_2$ ratio under 1.20 is not suitable for the invention.

Samples 7 and 17 pertain to the use of steel slag BOF, which has a $(CaO+MgO)/SiO_2$ ratio of 4.47. When compared to the non-carbonated test (Sample 7), the carbonated sample (Sample17) shows a particularly strong increase of the compressive strength at 28 days. This sample is therefore working and is within the inventive range.

The invention substitutes a cementitious material in a hydraulic binder composition with a selected group of mineral components with a $(CaO+MgO)/SiO_2$ ratio between 1.20 and 5.0, in particular 1.20 and 2.0 in an advantageous manner.

It was surprisingly found that carbonating these mineral components and grinding them to a sufficient fineness does not lower the 28 compressive strength in comparison to the binder composition using pure cementitious material without the mineral component. It is thereby possible to lower the carbon footprint of such a hydraulic binder composition and the resulting concrete remarkably but avoiding any detrimental effect on the long term compressive strength.

To further characterize the advantages of the present invention, additional comparative tests have been carried out, in which 3 cement compositions have been tested:

CT1: A CEM III/A cement, comprising 55 wt.-% CEM I LT, 42 wt.-% non-carbonated GGBFS A, and 3 wt.-% ground limestone filler

CT2: A CEM III/A cement, comprising 55 wt.-% CEM I LT, 42 wt.-% carbonated GGBFS A, and 3 wt.-% ground limestone

CT3: A CEM III/A cement, comprising 55 wt.-% CEM I LT, 35 wt.-% non-carbonated GGBFS A, and 10 wt.-% Durcal 10.

The GGBFS A carbonates to capture an equivalent of 8.2 wt.-% $CO_2$, which corresponds to the formation of an amount of calcium carbonate of 7 wt.-% of the total weight of cement. CT2 then has the following full composition: is 55 wt.-% CEM I B, 35 wt.-% non-carbonated GGBFS A, and 10 wt.-% ground limestone.

CT3 was then prepared by replacing all sources of calcium carbonate in CT2 by Durcal 10. Durcal 10 is a fine ground calcium carbonate provided by Omya, having a Blaine value of 5'000 $cm^2$/g. The total amounts of CEM I B and non-carbonated GGBFS A in samples CT2 and CT3 are therefore the same. Furthermore, as the carbonation results in the formation of calcium carbonate in the mineral component, the total amount of calcium carbonate in samples CT2 and CT3 remains also the same.

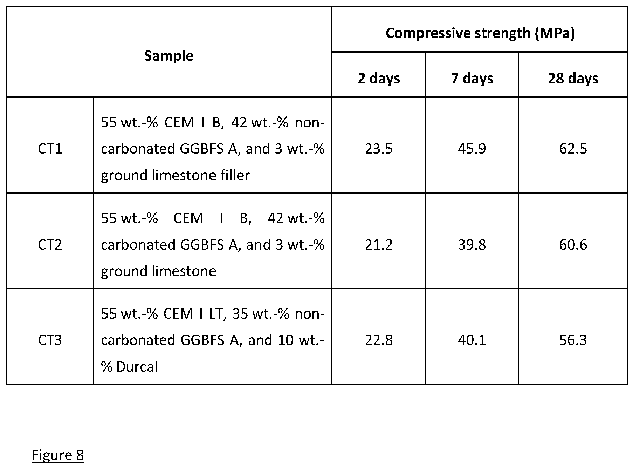

The results of these three tests are provided in Figure 8. When compared to CT1, CT2 shows a small reduction in strength and 2 days, 7 days, and 28 days. When compared to CT1, CT3 also shows a smaller reduction in strength at 2 days, and stronger decrease at 28 days. Interestingly, even though the total composition of CT2 and CT3 are the same, the compressive strength at 28 days of CT3 is significantly lower to that of CT2.

**Claims**

1. Method for the preparation of a carbonated mineral component in particular for the use as a substituent of cement in hydraulic binder compositions wherein a mineral component with a (CaO+MgO)/$SiO_2$ weight ratio of 1.20 to 5.0 is

   - ground to obtain a powder;
   - the powder is mixed with water;
   - the paste composed of the mineral component with water is placed in a reactor in an atmosphere containing $CO_2$;
   - the paste is left to carbonate in the reactor for a predetermined time
   - the hardened resulting material is dried until its weight is constant;
   - the resulting material is deagglomerated and sieved

   or

   - the mineral component is ground to a Blaine fineness comprised between 3'000 cm2/g and 10'000 cm2/g to obtain a powder;
   - during grinding in a mill a $CO_2$ rich gas is injected into the mill so that the component carbonates.
   - the powder is mixed with water at a solid to water weight ratio comprised between 0.3 and 1.5 to obtain a paste, or pre-humidified by adding water at a solid to water weight ratio comprised between 0.03 and 0.2;
   - the hardened resulting material is dried at a temperature of 60 - 85°C, preferentially 80°C until its weight is constant;
   - the resulting material is deagglomerated and sieved.

2. Method according to claim 1, wherein the minimum content of CaO in the mineral component is 35 wt-% measured by XRF.

3. Method according to claim 1, wherein the $CO_2$ rich gas is a combustion gas from a cement plant.

4. Method according to claim 1, wherein the (CaO+MgO)/$SiO_2$ weight ratio is 1.20 to 2.0.

5. Method according to claim 1 wherein the mineral component is ground to a Blaine fineness comprised between 3'000 $cm^2$/g and 10'000 $cm^2$/g, preferentially between 5000 and 8000 $cm^2$/g.

6. Method according to claim 1 wherein the powder of the mineral component is mixed with water at a solid to water weight ratio comprised between 0.3 and 1.5, to obtain a paste, or pre-humidified by adding water at a solid to water weight ratio comprised between 0.03 and 0.2.

7. Method according to claim 1 wherein the reactor operates at normal atmospheric pressure, a temperature of 50 - 90°C and relative humidity of 56 - 95%.

8. Method according to claim 1 wherein the paste is left to carbonate in the reactor for a duration between 12 and 52 hours, preferentially 18 to 30 hours, more preferred 20 to 26 hours, and most preferred 24 hours.

9. Method according to claim 1 wherein the hardened resulting material is dried at a temperature of 60 - 85°C, preferentially 80°C.

10. Method according to claim 1 wherein the resulting material is sieved to 63 $\mu$m to exclude coarse aggregates.

11. Method according to one of the preceding claims wherein the resulting carbonated mineral component is ground to a Blaine fineness of 3'000 cm$^2$/g to 10'000 cm$^2$/g.

12. Method according to one of the preceding claims wherein the mineral component is chosen from at least one of ground granulated blast-furnace slag, ground steel slag, fly ash, ground concrete demolition waste, and preferentially ground granulated blast-furnace slag only.

13. Carbonated mineral component manufactured according to one of the preceding claims with a $(CaO+MgO)/SiO_2$ weight ratio of 1.2 to 5.0 calculated on the non-carbonated constituents.

14. Carbonated mineral component according to claim 10 wherein the carbonated mineral component has a degree of carbonation between 5 and 20 weight-% calculated on the non-carbonated constituents, preferably between 8 and 16 weight-% calculated on the non-carbonated constituents.

15. Carbonated mineral component according to claim 10 or 11 wherein the carbonated mineral component has a Blaine fineness of 3'000 cm$^2$/g to 10'000 cm$^2$/g.

16. Method for the preparation of a binder composition in particular a hydraulic binder composition wherein a carbonated mineral component according to claims 10 to 12 with a $(CaO+MgO)/SiO_2$ weight ratio of 1.2 to 5.0 calculated on the weight of the non-carbonated constituents is mixed with at least a cementitious component, in particular a Portland cement or a Portland cement clinker.

17. Method according to claim 16 wherein the carbonated mineral component is added to cement clinker before or at the milling and ground together with the cement clinker to obtain a binder composition comprising at least the carbonated mineral component and the cement.

18. Method according to claim 16 wherein the ground carbonated mineral component with a Blaine fineness of 3'000 cm$^2$/g to 10'000 cm$^2$/g, preferentially 5'000cm$^2$/g to 8'000 cm$^2$/g is mixed at least with the ground cement to obtain a binder composition comprising at least the carbonated mineral component and the cement.

19. The use of a carbonated mineral component according to claims 13 to 15, manufactured according to one of the claims 1 to 12 as a substituent for cement in a hydraulic binder composition for mortars and concrete.

| Material | Type | Origin |
|---|---|---|
| CEM I A | CEM I 52.5 type cement | |
| CEM I B | CEM I 52.5 type cement | |
| Durcal | Ground limestone powder | Commercial product sold by Omya |
| CDW | Ground concrete demolition waste | Switzerland |
| GGBFS A | Ground granulated blast furnace slag | |
| GGBFS B | Ground granulated blast furnace slag | |
| Steel Slag | Ground steel slag | |
| GGBFS C | Ground granulated blast furnace slag of high content | |
| Fly ash A | Fly ash | |

Figure 1

| Component | D10 (µm) | D50 (µm) | D90 (µm) | Blaine (cm²/g) |
|---|---|---|---|---|
| Durcal | 2.5 | 13.5 | 34.9 | 5'000 |
| CDW | 2.1 | 24.3 | 120.1 | 5'110 |
| GGBFS A | 3.0 | 12.4 | 31.9 | 4'710 |
| GGBFS B | 2.9 | 12.5 | 34.3 | 4'920 |
| Steel Slag | N.M. | 13.0 | N.M. | 4'200 |
| GGBFS C | 1.6 | 4.4 | 9.3 | 9'370 |
| CEM I A | 2.9 | 14.5 | 39.0 | 3'880 |
| CEM I B | 3.2 | 14.3 | 37.2 | 3'680 |

Figure 2

| Mineral Component | CaO content (wt.-%) | MgO content (wt.-%) | $SiO_2$ content (wt.-%) | $(CaO+MgO)/SiO_2$ |
|---|---|---|---|---|
| CDW | 22.9 | 1.5 | 45.9 | 0.53 |
| GGBFS A | 41.6 | 7.4 | 35.6 | 1.38 |
| GGBFS B | 39.7 | 8.5 | 36.4 | 1.32 |
| Steel Slag | 42.7 | 5.6 | 10.8 | 4.47 |
| GGBFS C | 33.9 | 6.1 | 34.7 | 1.15 |
| Fly ash B | 31.1 | 4.1 | 34.5 | 1.02 |

Figure 3

| | Sample | Compressive strength (MPa) | | | Carbonation of the mineral component | |
|---|---|---|---|---|---|---|
| | | 2 days | 7 days | 28 days | w/s | wt.-% $CO_2$ |
| 1 | Reference CEM I not carbonated | CEM I A (100 wt.-%) | 35.58 | 49.11 | 61.22 | - | - |
| 2 | | CEM I B (100 wt.-%) | 41.9 | 56.2 | 67.4 | - | - |
| 3 | Samples not carbonated | CEM I A + Durcal 10 (75/25) | 26.92 | 39.43 | 42.7 | - | - |
| 4 | | CEM I A + CDW (75/25) | 26.08 | 37.77 | 45.38 | - | - |
| 5 | | CEM I A + Fly ash B (75/25) | 28.79 | 43.33 | 55.25 | - | - |
| 6 | | CEM I A + GGBFS A (75/25) | 29.56 | 43.03 | 61.63 | - | - |
| 7 | | CEM I A + Steel slag 75/25 | 24.39 | 37.13 | 45.98 | | |
| 8 | | CEM I A (75 wt.-%) + GGBFS A (19.25 wt.-% + Durcal 10 (5.75 wt.-%) | 30.24 | 44.37 | 58.81 | - | - |
| 9 | | CEM I A + GGBFS C (75/25) | N.M. | N.M. | N.M. | - | - |
| 10 | | CEM I B + GGBFS A (75/25) | 28.9 | 43.83 | 65.91 | - | - |
| 11 | | CEM I B + GGBFS B (75/25) | 24.69 | 40.74 | 60.49 | - | - |

Figure 4

| | | Sample | Compressive strength (MPa) | | | Carbonation of the mineral component | |
|---|---|---|---|---|---|---|---|
| | | | 2 days | 7 days | 28 days | w/s | wt.-% $CO_2$ |
| 12 | | CEM I A + Carbonated GGBFS A (75/25) | 27.5 | 41.65 | 62.46 | 0.4 | 8.2 |
| 13 | | CEM I A + Carbonated GGBFS A (75/25) (2nd test) | 28.51 | 40.95 | 63.6 | 0.4 | 8.2 |
| 14 | | CEM I B + Carbonated GGBFS A (75/25) | 26.61 | 43.86 | 68.48 | 0.4 | 8.2 |
| 15 | Samples in which the mineral component is carbonated | CEM I A + Carbonated CDW (75/25) | 26.11 | 37.02 | 44.94 | 0.4 | 1.4 |
| 16 | | CEM I B + Carbonated GGFBS B (75/25) | 23.43 | 42.1 | 62.61 | 0.4 | 3.9 |
| 17 | | CEM I A + Carbonated Steel slag (75/25) | 29.40 | N.M. | 54.20 | N.M. | 14.4 |
| 18 | | CEM I A + Carbonated Fly ash B(75/25) | 29.85 | 42.13 | 52.33 | 0.5 | 10.9 |
| 19 | | CEM I A + Carbonated GGBFS C (75/25) | N.M. | N.M. | N.M. | 0.4 | 1.0 |

N.M.: Not Measured

Figure 5

Figure 6

| | % weight gain after carbonation | % $CO_2$ (LOI) | % $H_2O$ (LOI) |
|---|---|---|---|
| GGBFS A (24h) - 4710 cm2/g | 13.2 | 8.2 | 4.99 |
| GGBFS A (24h) - OREC (5920 cm2/g) | 17.7 | 10 | 7.7 |

Figure 7

| Sample | | Compressive strength (MPa) | | |
|---|---|---|---|---|
| | | 2 days | 7 days | 28 days |
| CT1 | 55 wt.-% CEM I B, 42 wt.-% non-carbonated GGBFS A, and 3 wt.-% ground limestone filler | 23.5 | 45.9 | 62.5 |
| CT2 | 55 wt.-% CEM I B, 42 wt.-% carbonated GGBFS A, and 3 wt.-% ground limestone | 21.2 | 39.8 | 60.6 |
| CT3 | 55 wt.-% CEM I LT, 35 wt.-% non-carbonated GGBFS A, and 10 wt.-% Durcal | 22.8 | 40.1 | 56.3 |

Figure 8

Europäisches
Patentamt

European
Patent Office

Office européen
des brevets

# EUROPEAN SEARCH REPORT

Application Number

EP 21 21 5647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 984 978 A1 (HEIDELBERGCEMENT AG [DE]) 20 April 2022 (2022-04-20) <br><br> * the whole document * <br> ----- | 1,4-6,8, 11-16, 18,19 | INV. <br> C04B20/02 <br> C04B28/10 |
| X | LIU GANG ET AL: "Valorization of converter steel slag into eco-friendly ultra-high performance concrete by ambient CO2 pre-treatment", <br> CONSTRUCTION AND BUILDING MATERIALS, ELSEVIER, NETHERLANDS, <br> vol. 280, 12 February 2021 (2021-02-12), XP086521650, <br> ISSN: 0950-0618, DOI: 10.1016/J.CONBUILDMAT.2021.122580 <br> [retrieved on 2021-02-12] <br> * the whole document * <br> ----- | 1-3,7,9, 10, 12-14, 16,17,19 | |
| A | JP 2014 189423 A (DENKI KAGAKU KOGYO KK) 6 October 2014 (2014-10-06) <br> * the whole document * <br> ----- | 1-19 | |

TECHNICAL FIELDS
SEARCHED    (IPC)

C04B

The present search report has been drawn up for all claims

| Place of search | Date of completion of the search | Examiner |
|---|---|---|
| Munich | 18 May 2022 | Roesky, Rainer |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 21 5647

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2022

| Patent document cited in search report | | Publication date | Patent family member(s) | | Publication date |
|---|---|---|---|---|---|
| EP 3984978 | A1 | 20-04-2022 | EP | 3984978 A1 | 20-04-2022 |
|  |  |  | WO | 2022078798 A1 | 21-04-2022 |
| JP 2014189423 | A | 06-10-2014 | JP | 6195460 B2 | 13-09-2017 |
|  |  |  | JP | 2014189423 A | 06-10-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3656750 A
- WO 2019115722 A
- EP 3581257 A
- EP 3498681 A1

**Non-patent literature cited in the description**

- **YINGPENG HU.** *Journal of Energy Chemistry,* September 2017, vol. 26 (5), 927-935
- **JUNHO KIM ; SEUNG HYUN NA ; YUKIO HAMA.** *materials (Basel),* 13 November 2020, vol. 21, 4787